# EUROPEAN PATENT APPLICATION

(11) **EP 3 031 957 A1**
(43) Date of publication of application: **15.06.2016**
(21) Application number: 15196863.3
(22) Date of filing: 27.11.2015
(51) Int. Cl.: C25D 13/02, C25D 13/12, C25D 13/22, C23C 18/16

(54) **METHODS OF FORMING AN ARTICLE USING ELECTROPHORETIC DEPOSITION, AND RELATED ARTICLES**

(30) Priority: 08.12.2014 US 201414563257
(71) Applicant: General Electric Company, Schenectady, NY 12345 (US)
(72) Inventor: ANTOLINO, Nicholas Edward, Niskayuna, New York 12309 (US); LIPKIN, Don Mark, Niskayuna, New York 12309 (US); RUTKOWSKI, Stephen Francis, Duanesburg, New York 12056 (US)
(74) Representative: Williams, Andrew Richard

(57) **Abstract**

In one example of the present technology, a method 10 for forming an article includes disposing 11 an electrically conductive coating 120 on a substrate 110. The method further includes disposing 12 a layer stack 150 on the electrically conductive coating 120 by (i) disposing a first barrier coating 130 by electrophoretic deposition; (ii) heat treating the first barrier coating 130; (iii) disposing an electrically conductive layer 140 on the first barrier coating130; and (iv) optionally repeating steps (i) to (iii). The method 10 further includes disposing a second barrier coating 160 on an outermost electrically conductive layer in the layer stack 150 by electrophoretic deposition; and heat treating the second barrier coating 160.

## Description

The present technology generally relates to methods of forming an article using electrophoretic deposition. More particularly, the present technology relates to methods of forming an article by disposing one or more barrier layers using electrophoretic deposition.

As the push for higher efficiency has driven higher operating temperatures for gas turbine engines, it becomes desirable to correspondingly improve the high temperature durability of the components of the engine. Monolithic ceramics, ceramic matrix composites (CMCs), and refractory metal silicides offer increased temperature capability over iron, nickel and cobalt-based superalloys.

CMCs are a class of materials that include a ceramic reinforcing material surrounded by a ceramic matrix phase. Such materials, along with certain monolithic ceramics (i.e. ceramic materials without a reinforcing material), provide a desirable combination of high-temperature strength and low density compared to metallic superalloys.

CMCs, monolithic ceramic components, and refractory metal silicides may be coated with environmental barrier coatings (EBCs) to protect them from the harsh environment of high temperature engine sections. EBCs can protect the substrate from heat and corrosive gases in the combustion environment. For example, EBCs can protect silicon-containing substrates from volatilization in high temperature steam. However, the standard, industrial coating processes currently used to apply the EBCs (such as plasma spray) may have some drawbacks. One such drawback is the difficulty in applying hermetic coatings onto components with non-line-of-sight features and regions of high convex and concave curvature.

Accordingly, there remains a need for improved methods for depositing environmental barrier coatings. Further there is a need for improved articles incorporating the coatings deposited using these methods.

In one example of the present technology, a method for forming an article includes disposing an electrically conductive coating on a substrate. The method further includes disposing a layer stack on the electrically conductive coating by (i) disposing a first barrier coating by electrophoretic deposition; (ii) heat treating the first barrier coating; (iii) disposing an electrically conductive layer on the first barrier coating; and (iv) optionally repeating steps (i) to (iii). The method further includes disposing a second barrier coating on an outermost electrically conductive layer in the layer stack by electrophoretic deposition; and heat treating the second barrier coating.

In another example of the present technology, an article formed by the method described herein is presented.

In another example of the present technology, a method for forming an article includes disposing an electrically conductive coating on a substrate. The method further includes disposing a layer stack on the electrically conductive coating by (i) disposing a first barrier coating by electrophoretic deposition, wherein the first barrier coating includes a rare earth disilicate; (ii) heat treating the first barrier coating; (iii) disposing an electrically conductive layer on the first barrier coating; and (iv) optionally repeating steps (i) to (iii). The method further includes disposing a second barrier coating on an outermost electrically conductive layer in the layer stack by electrophoretic deposition, wherein the second barrier coating includes a rare earth monosilicate; and heat treating the second barrier coating.

Various features, aspects, and advantages of the present technology will become better understood when the following detailed description is read with reference to the accompanying drawings, wherein:
FIG. 1a is an illustration of a method step according to an example of the present technology;
FIG. 1b is an illustration of a method step according to an example of the present technology;
FIG. 1c is an illustration of a method step according to an example of the present technology; and
FIG. 2 is an illustration of a method according to an example of the present technology.

In the following specification and the claims, which follow, reference will be made to a number of terms, which shall be defined to have the following meanings. The singular forms "a", "an" and "the" include plural referents unless the context clearly dictates otherwise. "Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about", and "substantially" is not to be limited to the precise value specified. In some instances, the approximating language may correspond to the precision of an instrument for measuring the value. Similarly, "free" may be used in combination with a term, and may include an insubstantial number, or trace amounts, while still being considered free of the modified term. Here and throughout the specification and claims, range limitations may be combined and/or interchanged, such ranges are identified and include all the sub-ranges contained therein unless context or language indicates otherwise.

As used herein, the term "layer" refers to a material disposed on at least a portion of an underlying surface in a continuous or discontinuous manner. Further, the term "layer" does not necessarily mean a uniform thickness of the disposed material.

As used herein, the term "coating" refers to a material disposed on at least a portion of an underlying surface in a continuous or discontinuous manner. Further, the term "coating" does not necessarily mean a uniform thickness of the disposed material, and the disposed material. The term "coating" may refer to a single layer of the coating material or may refer to a plurality of layers of the coating material. The coating material may be the same or different in the plurality of layers.

As used herein, the term "disposed on" refers to layers or coatings disposed directly in contact with each other or indirectly by having intervening layers there between, unless otherwise specifically indicated. The term "adjacent" as used herein means that at least a portion of the two layers or coatings are disposed contiguously and are in direct contact with each other.

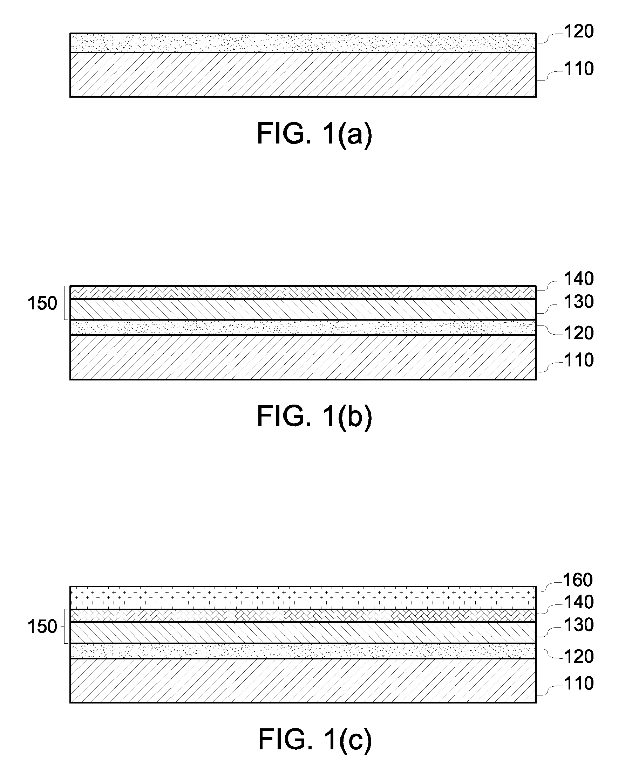

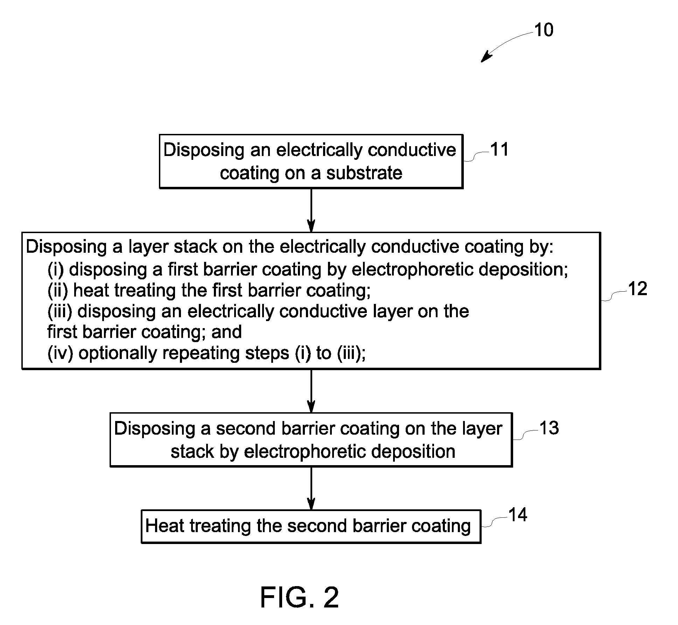

Figures 1 and 2 illustrate a method 10 in accordance with an example of the present technology. As illustrated in Figures 1a and 2, the method 10 includes, at step 11, disposing an electrically conductive coating 120 on a substrate 110. The method (Figures 1b and 2) further includes, at step 12, forming a layer stack 150 on the electrically conductive coating 120 by: (i) disposing a first barrier coating 130 by electrophoretic deposition; (ii) heat treating the first barrier coating 130; (ii) disposing an electrically conductive layer 140 on the first barrier coating; and optionally repeating steps (i) to (iii). The method further includes (Figures 1c and 2), at step 13, disposing a second barrier coating 160 on an outermost electrically conductive layer 140 in the layer stack 150 by electrophoretic deposition. The method further includes at step 14, heat treating the second barrier coating 160.

The substrate 110 may include a silicon-containing material. Non-limiting examples of suitable silicon-containing materials include silicon carbide, silicon nitride, silicide (for example, a refractory metal or transition metal silicide), elemental silicon, or combinations thereof. The silicon containing material may be present in the substrate as one or both of the matrix and a second phase.

Further, examples of substrate 110 include ceramic matrix composites (CMCs) or monolithic ceramics. As used herein, the term "monolithic ceramics" refers to ceramic materials without reinforcing materials, for example, fibers or whiskers. As used herein, the term "CMCs" refers to materials including ceramic fibers incorporated in a ceramic matrix, thus forming a ceramic fiber reinforced ceramic. Suitable CMCs include silicon-containing CMCs and oxide-based CMCs, such as oxide-oxide CMCs.

In silicon-containing CMCs, one or both of the matrix and the reinforcing fiber may include a silicon-containing material, such as silicon, silicon carbide, silicon nitride, silicon oxycarbide, silicon oxynitride, or combinations thereof Non-limiting examples of suitable CMCs include CMCs including silicon carbide matrix and silicon carbide fiber; CMCs including silicon nitride matrix and silicon carbide fiber; and CMCs including silicon carbide/silicon nitride matrix mixture and silicon carbide fiber.

In oxide-oxide CMCs, one or both of the matrix and reinforcing fiber may include an oxide, such as aluminum oxide (Al₂O₃), silicon dioxide (SiO₂), aluminosilicate, or combinations thereof. Aluminosilicates may include crystalline materials such as mullite (3Al₂O₃·2SiO₂) as well as glassy aluminosilicates.

The electrically conductive coating 120 may include elemental silicon, metal silicide, silicon carbide, or combinations thereof. Non-limiting examples of suitable metal silicides include rare earth silicides, chromium silicide (e.g. CrSi₂), niobium silicide (e.g. NbSi₂, Nb₅Si₃), molybdenum silicide (e.g. MoSi₂, Mo₅Si₃), tantalum silicide (e.g. TaSi₂), titanium silicide (e.g. TiSi₂), tungsten silicide (e.g. WSi₂, W₅Si₃), zirconium silicide (e.g. ZrSi₂), hafnium silicide (e.g. HfSi₂), or combinations thereof. In one example, the electrically conductive coating 120 includes elemental silicon.

The thickness of the electrically conductive coating 120 may be in a range from about 10 microns to about 150 microns. The electrically conductive coating 120 may be disposed on the substrate 110 by plasma spray, combustion thermal spray, chemical vapor deposition, electron beam physical vapor deposition, molten silicon dipping, sputtering, powder-based application and sintering, and other conventional application processes known to those skilled in the art.

The electrically conductive properties of the coating 120 allows for deposition of the first barrier coating 130 by electrophoretic deposition. In some examples of the present technology, the electrically conductive coating 120 may further function as a bond coating between the substrate and the overlying first barrier coating 130. The term "bond coating" as used herein refers to a coating that provides for improved adhesion between a substrate and an overlying coating. In some such instances, the electrically conductive coating 120 may also serve as an oxidation barrier to prevent oxidation of the substrate 110. In some other examples of the present technology, the method may further include a step of disposing an additional bond coating (not shown in Figures) on the substrate prior to the step of disposing the electrically conductive coating.

As noted earlier, the method further includes forming a layer stack 150. In some instances, the layer stack 150 may include a single first barrier coating 130 and a single electrically conductive layer 140, as illustrated in Fig. 1. In such instances, the first barrier coating 130 is disposed on the electrically conductive coating 120 by electrophoretic deposition followed by heat treatment and deposition of the electrically conductive layer 140 to form a layer stack 150. The second barrier coating 160 is then disposed on the electrically conductive layer 140 by electrophoretic deposition. As mentioned earlier, the method further includes heat treating the second barrier coating 160. In some instances, the method further includes at least partial densification of the first barrier coating and the second barrier coating during the heat treatment steps.

Alternatively, the layer stack 150 may include a plurality of first barrier coatings 130 and a plurality of electrically conductive layers 140. In such instances, the plurality of first barrier coatings 130 and the plurality of electrically conductive layers 140 are disposed in an alternating manner (not shown in Figures). In such instances, the method includes first disposing a first barrier coating 130 on the electrically conductive coating 120 by electrophoretic deposition, heat treating the first barrier coating 130, disposing an electrically conductive layer 140 on the first barrier coating 130, disposing a first barrier coating 130 on the electrically conductive layer 140 by electrophoretic deposition, heat treating the first barrier coating 130, disposing an electrically conductive layer 140 on the first barrier coating 130 by electrophoretic deposition, and so on to form the layer stack 150.

As noted, the first barrier coating 130 is deposited by electrophoretic disposition. Accordingly, in instances requiring a plurality of first barrier coatings 130 (for example, to build thickness while maintaining coating hermeticity and uniformity), application of an electrically conductive layer 140 prior to the deposition of the first barrier coating 130 facilitates electrophoretic deposition of the barrier coating material. Without the electrically conductive layers 140, electrophoretic deposition of successive first barrier coatings 130 may not be possible as the first barrier coatings 130 are inherently electrically insulative.

The term "barrier coating" as used herein refers to a coating that may function as an environmental barrier coating, a thermal barrier coating, a chemical barrier coating, or combinations thereof. A barrier coating may thus perform one or more of the following functions: inhibiting formation of volatile silicon hydroxide (for example, Si(OH)₄) products; inhibiting water vapor ingress to the oxidizing surface; inhibiting the ingress of chemical contaminants to the substrate; and reducing the amount of heat flux into the substrate. A barrier coating may further exhibit one or more of the following properties: a coefficient of thermal expansion (CTE) compatible with the Si-containing substrate material, low permeability for oxidants, low thermal conductivity, low silica chemical activity, and chemical compatibility with the underlying Si-containing material and thermally grown silica. The barrier coating is typically an electrically insulating material.

The first barrier coating 130 may include a material suitable for use on ceramic substrate components found in high temperature environments (e.g., operating temperatures greater than 1140° C), such as those present in gas turbine engines. In some embodiments, the first barrier coating 130 includes a rare earth silicate. In some embodiments, the first barrier coating 130 includes a rare earth disilicate, a rare earth monosilicate, or combinations thereof. Non-limiting examples of suitable rare earth metals include scandium, yttrium, lanthanum, cerium, gadolinium, praseodymium, neodymium, promethium, samarium, europium, terbium, dysprosium, holmium, erbium, thulium, ytterbium, lutetium, or combinations thereof.

In some embodiments, the first barrier coating 130 includes a rare earth disilicate, wherein the rare earth elements comprise ytterbium, yttrium, or combinations thereof. The first barrier coating 130 may also include one or more additional constituents such as dopants, sintering aids and the like. For example, the first barrier coating 130 may further include rare earth monosilicates, wherein the rare earth elements comprise ytterbium, yttrium, or combinations thereof, as well as oxides of iron, aluminum, silicon or boron.

Each first barrier coating 130 may have a thickness in a range from about 5 microns to about 200 microns. In instances wherein the method includes disposing a plurality of first barrier coatings 130, each first barrier coating 130 in the layer stack 150 may have the same composition as the other first barrier coatings 130, or alternately may have a different composition. Further, the thickness of the first barrier coatings 130 in the layer stack 150 may be the same or different.

As noted earlier, the electrically conductive layer 140 in the layer stack 150 allow for deposition of the subsequent barrier coating (first barrier coating 130 or second barrier coating 160) by electrophoretic deposition. The electrically conductive layer 140 may include a material and a thickness capable of providing the desired conductive properties without significantly compromising the functionality or properties of the first barrier coating 130 and the second barrier coating 160.

The electrically conductive layer 140 may include a metal, an intermetallic, a metalloid, carbon, a conductive polymer, or combinations thereof. In some instances, the electrically conductive layer 140 includes gold, silver, nickel, a conductive polymer, carbon, palladium, platinum, copper, iron, cobalt, boron, or combinations thereof.

The electrically conductive layer may include nanoparticles of an electrically conductive material in some instances. The particle size may be in a range from 1 nanometer to about 10 nanometers. The nanoparticles may be deposited on the first barrier coating 130 in a powder form or as a paste.

Each electrically conductive layer 140 may have a thickness in a range from about 10 nanometers to about 5 microns. In instances wherein the method includes disposing a plurality of electrically conductive layers 140, each electrically conductive layer 140 in the layer stack 150 may have the same composition as the other electrically conductive layer 140, or alternately may have a different composition. Further, the thickness of the electrically conductive layers 140 in the layer stack 150 may be the same or different. The electrically conductive layer may be disposed by electroless (auto-catalytic) plating, spraying, dip coating or combinations thereof.

The method further includes disposing a second barrier coating 160, as illustrated in Figures 1 and 2. The second barrier coating 160 may include a rare earth silicate. The second barrier coating 160 may include a rare earth disilicate, a rare earth monosilicate, or combinations thereof. Non-limiting examples of suitable rare earth metals include scandium, yttrium, lanthanum, cerium, gadolinium, praseodymium, neodymium, promethium, samarium, europium, terbium, dysprosium, holmium, erbium, thulium, ytterbium, lutetium, or combinations thereof.

In some instances, the second barrier coating 160 includes a rare earth monosilicate selected from the group consisting of yttrium monosilicate, ytterbium monosilicate, and combinations thereof. The second barrier coating 160 may also include one or more additional constituents such as dopants, sintering aids and the like. For example, the second barrier coating 160 may further include rare earth disilicates, wherein the rare earth elements comprise ytterbium, yttrium, or combinations thereof, as well as oxides of iron, aluminum, silicon or boron. The second barrier coating 160 may also have a thickness in a range from about 5 microns to about 300 microns.

As mentioned previously, the second barrier coating 160 is deposited on the outermost electrically conductive layer 140 in the layer stack 150 by electrophoretic deposition. The method further includes heat treating the second barrier coating.

Some of the example methods in accordance with the present technology allow for fabrication of articles by depositing one or more layers by electrophoretic deposition. As noted previously, a first barrier coating is disposed over an electrically conductive coating and heat treated to at least partially densify it. Optionally, a thin electrically conductive layer is disposed over the underlying first barrier coating, allowing for deposition of a subsequent first barrier coating by electrophoretic deposition. This sequence is optionally repeated to build up a stack of first barrier layers. Further, disposing an outermost thin electrically conductive layer on the layer stack allows for deposition of the second barrier coating by electrophoretic deposition.

An article formed by the method described herein is also presented. The present technology is generally applicable to components that operate within environments characterized by high temperatures, thermal cycling, thermal and mechanical stresses, and oxidation. Examples of such components include high and low pressure turbine vanes (nozzles) and blades (buckets), shrouds, combustor components (e.g., liners), heat shields, augmentor hardware, and other hot section components of turbine engines, though the technology has application to other components. A turbine engine component including the article as described herein is also presented.

### EXAMPLES

The following examples illustrate methods and embodiments in accordance with the present technology.
Example 1: A silicon coated ceramic matrix composite was provided such that its surface was electrically conductive. A layer of ytterbium disilicate was deposited by electrophoretic deposition from a bath consisting of 28 percent by mass ytterbium disilicate, 0.25 percent by mass iron (II,II) oxide, 0.05 percent by mass aluminum oxide, 0.05 percent by mass polyethylenimine, and 71.65 percent by mass ethanol using a voltage of 60 volts at 2 cm standoff for 15 seconds. The coating was air dried and heat treated in air at 1345 degrees Celsius for 10 hours. The coating was then placed into a commercially available electroless gold bath (angelgilding.com) for 40 minutes according to the manufacturer's instructions. After drying, a layer of yttrium monosilicate was deposited by electrophoretic deposition from a bath consisting of 22.72 percent by mass yttrium monosilicate, 0.67 percent by mass iron (II,II) oxide, 0.05 percent by mass polyethylenimine, and 76.56 percent by mass ethanol using a voltage of 30 volts at 1.7 cm standoff for 10 seconds. The coating was air dried and heat treated in air at 1345 degrees Celsius for 10 hours.
Example 2: A silicon-coated ceramic matrix composite was provided such that its surface was electrically conductive. A layer of ytterbium disilicate was deposited by electrophoretic deposition from a bath consisting of 28 percent by mass ytterbium disilicate, 0.25 percent by mass iron (II,II) oxide, 0.05 percent by mass aluminum oxide, 0.05 percent by mass polyethylenimine, and 71.65 percent by mass ethanol using a voltage of 60 volts at 2 cm standoff for 15 seconds. The coating was air dried and heat treated in air at 1345 degrees Celsius for 10 hours. A fine aerosol of silver nanoparticles (Harima NPS-J Nano Paste (R)) was applied to the coating and heat treated at 220 degrees Celsius in air for 1 hour. A second layer of ytterbium disilicate was deposited by electrophoretic deposition from a bath consisting of 28 percent by mass ytterbium disilicate, 0.25 percent by mass iron (II,II) oxide, 0.05 percent by mass aluminum oxide, 0.05 percent by mass polyethylenimine, and 71.65 percent by mass ethanol using a voltage of 60 volts at 2 cm standoff for 15 seconds. The coating was air dried and heat treated in air at 1345 degrees Celsius for 10 hours. Then, another layer of fine aerosol of silver nanoparticles (Harima NPS-J Nano Paste (R)) was applied to the coating and heat treated at 220 degrees Celsius in air for 1 hour. Finally, a layer of yttrium monosilicate was deposited by electrophoretic deposition from a bath consisting of 22.72 percent by mass yttrium monosilicate, 0.67 percent by mass iron (II,II) oxide, 0.05 percent by mass polyethylenimine, and 76.56 percent by mass ethanol using a voltage of 30 volts at 1.7 cm standoff for 10 seconds. The coating was air dried and heat treated in air at 1345 degrees Celsius for 10 hours.
Example 3. A silicon-coated ceramic matrix composite was provided such that its surface is electrically conductive. A layer of ytterbium disilicate was deposited by electrophoretic deposition from a bath consisting of 28 percent by mass ytterbium disilicate, 0.25 percent by mass iron (II,II) oxide, 0.05 percent by mass aluminum oxide, 0.05 percent by mass polyethylenimine, and 71.65 percent by mass ethanol using a voltage of 60 volts at 2 cm standoff for 15 seconds. The coating was air dried and heat treated in air at 1345 degrees Celsius for 10 hours. The coating was then dipped into a bath of Plexcore^{®} OC RG-1110 conductive polymer and withdrawn to leave a thin coating. The conductive coating was cured at 150 degrees Celsius in air for 1hr. A layer of yttrium monosilicate was deposited by electrophoretic deposition from a bath consisting of 22.72 percent by mass yttrium monosilicate, 0.67 percent by mass iron (II,II) oxide, 0.05 percent by mass polyethylenimine, 76.56 percent by mass ethanol using a voltage of 30 volts at 1.7 cm standoff for 10 seconds. The coating was air dried and heat treated in air at 1345 degrees Celsius for 10 hours.

The foregoing examples are merely illustrative, serving to exemplify only some of the features of the present technology. The appended claims are intended to claim the inventions as broadly as permitted and the examples herein presented are illustrative only. Accordingly, the appended claims are not to be limited by the choice of examples utilized to illustrate features of the present technology. As used in the claims, the word "comprises" and its grammatical variants logically also subtend and include phrases of varying and differing extent such as for example, but not limited thereto, "consisting essentially of" and "consisting of." Where necessary, ranges have been supplied; those ranges are inclusive of all sub-ranges there between. It is to be expected that variations in these ranges will suggest themselves to a practitioner having ordinary skill in the art and where not already dedicated to the public, those variations should where possible be construed to be covered by the appended claims. It is also anticipated that advances in science and technology will make equivalents and substitutions possible that are not now contemplated by reason of the imprecision of language and these variations should also be construed where possible to be covered by the appended claims.

Various aspects and embodiments of the present invention are defined by the following numbered clauses:
1. A method for forming an article, comprising:
   (a) disposing an electrically conductive coating on a substrate;
   (b) disposing a layer stack on the electrically conductive coating by:
      (i) disposing a first barrier coating by electrophoretic deposition;
      (ii) heat treating the first barrier coating;
      (iii) disposing an electrically conductive layer on the first barrier coating; and
      (iv) optionally repeating steps (i) to (iii);
   (c) disposing a second barrier coating on an outermost electrically conductive layer in the layer stack by electrophoretic deposition; and
   (d) heat treating the second barrier coating.
2. The method of clause 1, wherein the first barrier coating and the second barrier coating undergo at least partial densification during the heat treatment steps.
3. The method of any preceding clause, wherein the electrically conductive layer is disposed by electroless plating, spraying, dip coating, physical vapor deposition, chemical vapor deposition, or combinations thereof.
4. The method of any preceding clause, wherein the electrically conductive layer comprises a metal, an intermetallic, a metalloid, carbon, a conductive polymer, or combinations thereof.
5. The method of any preceding clause, wherein the electrically conductive layer comprises gold, silver, nickel, a conductive polymer, carbon, palladium, platinum, copper, iron, cobalt, boron, or combinations thereof.
6. The method of any preceding clause, wherein the electrically conductive layer comprises electroless-plated gold platinum, palladium, copper, nickel, cobalt, iron, boron, or combinations thereof.
7. The method of any preceding clause, wherein the first barrier coating comprises a rare earth silicate.
8. The method of any preceding clause, wherein the first barrier coating comprises a rare earth disilicate selected from the group consisting of ytterbium disilicate, yttrium disilicate, and combinations thereof.
9. The method of any preceding clause, wherein the second barrier coating comprises a rare earth silicate.
10. The method of any preceding clause, wherein the second barrier coating comprises a rare earth monosilicate selected from the group consisting of yttrium monosilicate, ytterbium monosilicate, and combinations thereof.
11. The method of any preceding clause, wherein the electrically conductive coating disposed on the substrate comprises silicon, metal silicide, silicon carbide, or combinations thereof.
12. The method of any preceding clause, wherein the electrically conductive coating disposed on the substrate further functions as a bond coating between the substrate and the first barrier coating.
13. An article formed by the method of any preceding clause.
14. A turbine engine component comprising the article of any preceding clause
15. A method for forming an article, comprising:
   (a) disposing an electrically conductive coating on a substrate;
   (b) disposing a layer stack on the electrically conductive coating by:
      (i) disposing a first barrier coating by electrophoretic deposition, wherein the first barrier coating comprises a rare earth disilicate;
      (ii) heat treating the first barrier coating;
      (iii) disposing an electrically conductive layer on the first barrier coating; and
      (iv) optionally repeating steps (i) to (iii);
   (c) disposing a second barrier coating on an outermost electrically conductive layer in the layer stack by electrophoretic deposition, wherein the second barrier coating comprises a rare earth monosilicate; and
   (d) heat treating the second barrier coating.
16. The method of any preceding clause, wherein the first barrier coating and the second barrier coating undergo at least partial densification during the heat treatment steps.
17. The method of any preceding clause, wherein the electrically conductive layer is disposed by electroless plating, spraying, dip coating, physical vapor deposition, chemical vapor deposition, or combinations thereof.
18. The method of any preceding clause, wherein the electrically conductive layer comprises a metal, an intermetallic, a metalloid, carbon, a conductive polymer, or combinations thereof.
19. The method of any preceding clause, wherein the electrically conductive layer comprises gold, silver, nickel, a conductive polymer, carbon, palladium, platinum, copper, iron, cobalt, boron, or combinations thereof.
20. The method of any preceding clause, wherein the electrically conductive coating comprises silicon, metal silicide, silicon carbide, or combinations thereof.

## Claims

1. A method (10) for forming an article, comprising:
(a) disposing (11) an electrically conductive coating (120) on a substrate (110);
(b) disposing (12) a layer stack (150) on the electrically conductive coating (120) by:
(i) disposing a first barrier coating (130) by electrophoretic deposition;
(ii) heat treating the first barrier coating (130);
(iii) disposing an electrically conductive layer (140) on the first barrier coating (130); and
(iv) optionally repeating steps (i) to (iii);
(c) disposing (13) a second barrier coating (160) on an outermost electrically conductive layer in the layer stack (150) by electrophoretic deposition; and
(d) heat treating (14) the second barrier coating (160).

2. The method (10) of claim 1, wherein the first barrier coating (130) and the second barrier coating (160) undergo at least partial densification during the heat treatment steps (14).

3. The method (10) of any preceding claim, wherein the electrically conductive layer (140) is disposed by electroless plating, spraying, dip coating, physical vapor deposition, chemical vapor deposition, or combinations thereof.

4. The method of any preceding claim, wherein the electrically conductive layer (140) comprises a metal, an intermetallic, a metalloid, carbon, a conductive polymer, or combinations thereof.

5. The method (10) of any preceding claim, wherein the electrically conductive layer (140) comprises gold, silver, nickel, a conductive polymer, carbon, palladium, platinum, copper, iron, cobalt, boron, or combinations thereof.

6. The method (10) of any preceding claim, wherein the electrically conductive layer (140) omprises electroless-plated gold platinum, palladium, copper, nickel, cobalt, iron, boron, or combinations thereof.

7. The method (10) of any preceding claim, wherein the first barrier coating (130) comprises a rare earth silicate.

8. The method (10) of claim 7, wherein the first barrier coating (130) comprises a rare earth disilicate selected from the group consisting of ytterbium disilicate, yttrium disilicate, and combinations thereof.

9. The method (10) of any preceding claim, wherein the second barrier coating (160) comprises a rare earth silicate.

10. The method (10) of claim 9, wherein the second barrier coating (160) comprises a rare earth monosilicate selected from the group consisting of yttrium monosilicate, ytterbium monosilicate, and combinations thereof.

11. The method (10) of any preceding claim, wherein the electrically conductive coating (120) disposed on the substrate comprises silicon, metal silicide, silicon carbide, or combinations thereof.

12. The method (10) of any preceding claim, wherein the electrically conductive coating (120) disposed on the substrate further functions as a bond coating between the substrate (110) and the first barrier coating (130).

13. An article formed by the method of any preceding claim.

14. A turbine engine component comprising the article of claim 13.

15. A method (10) for forming an article, comprising:
(a) disposing an electrically conductive coating (120) on a substrate (110);
(b) disposing a layer stack (150) on the electrically conductive coating by:
(i) disposing a first barrier coating (130) by electrophoretic deposition, wherein the first barrier coating comprises a rare earth disilicate;
(ii) heat treating (14) the first barrier coating;
(iii) disposing an electrically conductive layer on the first barrier coating; and
(iv) optionally repeating steps (i) to (iii);
(c) disposing a second barrier coating (160) on an outermost electrically conductive layer in the layer stack by electrophoretic deposition, wherein the second barrier coating comprises a rare earth monosilicate; and
(d) heat treating the second barrier coating (160).
